## Europäisches Patentamt
## European Patent Office
## Office européen des brevets

(19)

(11) Publication number: **0 066 136**
**B1**

(12)

# EUROPEAN PATENT SPECIFICATION

(45) Date of publication of patent specification: **10.04.85**

(51) Int. Cl.⁴: **G 02 F 1/01**, G 02 F 1/133

(21) Application number: **82104153.0**

(22) Date of filing: **12.05.82**

(54) **Method of producing display device containing liquid display medium between two substrates.**

(30) Priority: **15.05.81 JP 72171/81**

(43) Date of publication of application:
**08.12.82 Bulletin 82/49**

(45) Publication of the grant of the patent:
**10.04.85 Bulletin 85/15**

(84) Designated Contracting States:
**DE FR GB**

(56) References cited:
**DE-A-2 503 579**
**DE-A-2 707 463**
**DE-A-2 921 097**
**DE-B-2 739 651**
**GB-A-2 050 637**
**US-A-4 232 075**

(73) Proprietor: **NISSAN MOTOR COMPANY, LIMITED**
**No.2, Takara-cho, Kanagawa-ku**
**Yokohama-shi Kanagawa-ken 221 (JP)**

(72) Inventor: **Miyagi, Harutoshi**
**Oppama Plant of Nissan Motor Co., Ltd.**
**1, Natsushima-cho Yokosuka City (JP)**
Inventor: **Ura, Mikio**
**Oppama Plant of Nissan Motor Co., Ltd.**
**1, Natsushima-cho Yokosuka City (JP)**
Inventor: **Oba, Toshiyuki**
**Oppama Plant of Nissan Motor Co., Ltd.**
**1-Natsushima-cho Yokosuka City (JP)**
Inventor: **Hayasaka, Norika**
**Oppama Plant of Nissan Motor Co., Ltd.**
**1-Natsushima-cho Yokosuka City (JP)**

(74) Representative: **Patentanwälte TER MEER - MÜLLER - STEINMEISTER**
**Mauerkircherstrasse 45**
**D-8000 München 80 (DE)**

Courier Press, Leamington Spa, England.

## Description

### Background of the invention

The invention relates to a method of producing an electronic display device containing a liquid display medium filled in a gap between two plate-shaped substrates which are arranged opposite and parallel to each other and both formed with electrode coating layers on the opposite surfaces thereof, the method having the steps of placing one of the two electrode coated substrates on the other with interposal of a finely divided spacer material therebetween and with application of a heat-curable adhesive to a peripheral region of at least one of the substrates so as to provisionally bond the two substrates to each other to thereby obtain a provisionally integrated blank cell, applying a pressure to the provisionally integrated blank cell to diminish the distance between the two substrates to a definite value determined by the spacer material, heating the provisionally integrated blank cell in the pressed state so as to cure the adhesive to thereby firmly bond the two substrates to each other, and filling a liquid display medium into the gap between the two substrates, and more particularly to an improvement in the assembling of a blank cell for the display device in respect of the uniformity of the gap or distance between the two substrates.

In general an electronic display device such as a liquid crystal display device is produced by first constructing a blank cell having two plate-shaped substrates, at least one of them being transparent, which are arranged opposite and parallel to each other with a short and determined distance therebetween and respectively provided with transparent electrode coatings on the inner or opposite surfaces, then filing a liquid display medium into the gap between the two substrates of the blank cell and hermetically sealing the resultant cell.

In producing the display device by such a method, it is a matter of fundamental importance to realize a uniform distance between the two substrates over the entire display area of the device. In a liquid crystal display device, for example, both the response time of the liquid crystal sandwiched between the two substrates in changing its optical properties upon application of a potential difference across the electrodes coated on the respective substrates and the density of the color the liquid crystal assumes depend greatly on the distance between the two substrates. If the two substrates in the completed cell are not uniformly spaced from each other, the response time of the liquid crystal exhibits such large dispersion as causes significant deterioration of the displaying function of the device and, besides, there arises a serious problem with aesthetic appearance of the display by reason of unevenness of the color of the display area.

Therefore, it becomes necessary to interpose a certain spacer having an accurate thickness between the two substrates in order that the distance between the two substrates should be determined by the thickness of the spacer and kept constant and uniform during and after the assembling of the blank cell for the display device. Since the spacer for this purpose is required to be invisible by the naked eye from the outside of the display device, use is made of a finely divided spacer material. Typical examples of useful spacer materials are fibrous materials such as finely divided glass fiber and powdery materials such as fine powder of alumina.

In producing a relatively small-sized display device in accordance with the method disclosed in DE—A—2 707 463, such a spacer material is mixed with an adhesive which is applied to peripheral regions of the substrates and heat-cured while the provisionally integrated blank cell is kept adequately pressed in the direction normal to the substrates. In constructing a blank cell for a relatively large-sized display device such as an automotive dashboard display device, a finely divided spacer material is introduced into the gap between the two substrates over the entire area thereof besides the addition of the spacer material to the adhesive used in the peripheral regions, and the provisionally integrated blank cell is kept pressed in the direction normal to the substrates during heat-curing of the adhesive by using a suitable press machine and metal dies or holders. In practice, however, the blank cell obtained by this method is often unsatisfactory in the uniformity of the distance between the two substrates because it is very difficult to apply a truly uniform pressure to the relatively large-sized substrates by using a conventional press machine and metal dies or holders. Besides, it is not seldom that the substrates are bent or warped in a microscopical sense but it is difficult to completely remedy such deformity of the substrates during the pressure-bonding process in this method due to limitations to the precision in the flatness or parallelism of the metal dies or holders and in the operation of the press machine. Consequently it is difficult to actually obtain the intended effect of the spacer material interposed between the two substrates in integrating the blank cell for a relatively large-sized display device by using the conventional pressuring method.

EP—A—60 377 which was published after the date of the filing of the present patent discloses an apparatus for pressing together two substrates, specifically two plate-shaped substrates for an electronic display device containing a liquid display medium. This apparatus comprises two approximately parallel walls in between which the two substrates are introduced, wherein one wall is elastically deformable and can be pressurized by a pneumatic or hydraulic pressure which is higher than the pressure applicable to the sides of the substrates.

### Summary of the invention

It is an object of the present invention to provide an improved method of producing an electronic display device having two plate-shaped substrates arranged opposite and parallel to each other and bonded to each other in their peripheral regions so as to leave a determined gap between their major areas and a liquid display medium filled in said gap, in which method the bonding of the two substrates can be accomplished with high uniformity of the distance between the two substrates even when the substrates are large in width and length as in the case of producing a relatively large-sized display device for use in automotive dashboards for example.

The subject matter of the present invention therefore is a method of producing an electronic display device containing a liquid display medium filled in a gap between two plate-shaped substrates which are arranged opposite and parallel to each other and both formed with electrode coating layers on the opposite surfaces thereof, the method having the steps of placing one of the two electrode coated substrates on the other with interposal of a finely divided spacer material therebetween and with application of a heat-curable adhesive to a peripheral region of at least one of the substrates so as to provisionally bond the two substrates to each other to thereby obtain a provisionally integrated blank cell, applying a pressure to the provisionally integrated blank cell to diminish the distance between the two substrates to a definite value determined by the spacer material, heating the provisionally integrated blank cell in the pressed state so as to cure the adhesive to thereby firmly bond the two substrates to each other, and filling a liquid display medium into the gap between the two substrates, which is characterized in that the pressure applying step comprises the substeps of placing the provisionally integrated blank cell in a container which is at least partly made of a flexible and elastic material such that at least one of the two substrates faces to a wall of the flexible and elastic material, and producing a pressure difference across the walls of the container such that the pressure in the container becomes relatively low to such an extent that one of the two substrates is pressed toward the other via said wall of the flexible and elastic material.

It is convenient to produce a pressure difference across the walls of the container by reducing the pressure in the container to a subatmospheric pressure, but alternatively it is possible to place the container in a pressure vessel to pressurize the container from the outside. In the case of reducing the pressure in the container, it is favorable to interpose a spacer sheet permeable to gases between at least one of the two substrates of the provisionally integrated blank cell and a flexible and elastic wall of the container with a view to achieving a desired extent of evacuation without being obstacled by inward deflection of the flexible wall of the container.

By using the pressure-bonding method according to the invention the blank cell can be obtained with remarkably enhanced uniformity of the distance between the two substrates. This is because a very uniform pressure is transmitted to each substrate via the flexible and elastic material employed as the material of the container wall that is pressed against the substrate. Furthermore, microscopical deformity of the substrate such as warping or curving can be remedied during the pressure-bonding process since the flexible and elastic wall under pressure deforms in exact conformance with the shape of the substrate. As a further advantage of this method, there is practically no limitation to the width and length, and the plan-view shape, of the substrates to be bonded or the blank cell to be integrated by this method.

At present the method according to the invention is of practical use particularly in the production of liquid crystal display devices, but it is a matter of course that the same method is applicable also to the production of different kinds of electronic display devices containing liquid display medium such as electrochromic display devices and photochromic display devices.

Brief description of the drawings

Fig. 1 is an explanatory sectional view of a liquid crystal display device as an example of electronic display devices produced by a method according to the invention;

Fig. 2 is an explanatory bottom plan view of the upper substrate of the device of Fig. 1 at an intermediate stage of the manufacturing process;

Fig. 3 illustrates, in an explanatory sectional view, a pressure-bonding method embodying the invention in the assembling of a blank cell for the display device of Fig. 1;

Figs. 4 and 5 show two different modifications of the pressure-bonding method of Fig. 3, respectively;

Fig. 6 illustrates, in a schematic and perspective view, another modification of the pressure-bonding method of Fig. 3, wherein two sets of blank cells are assembled simultaneously;

Fig. 7 shows a modification of the method of Fig. 6; and

Fig. 8 illustrates, in an explanatory sectional view, another pressure-bonding method also embodying the invention in the assembling of the blank cell for the device of Fig. 1.

Description of the preferred embodiments

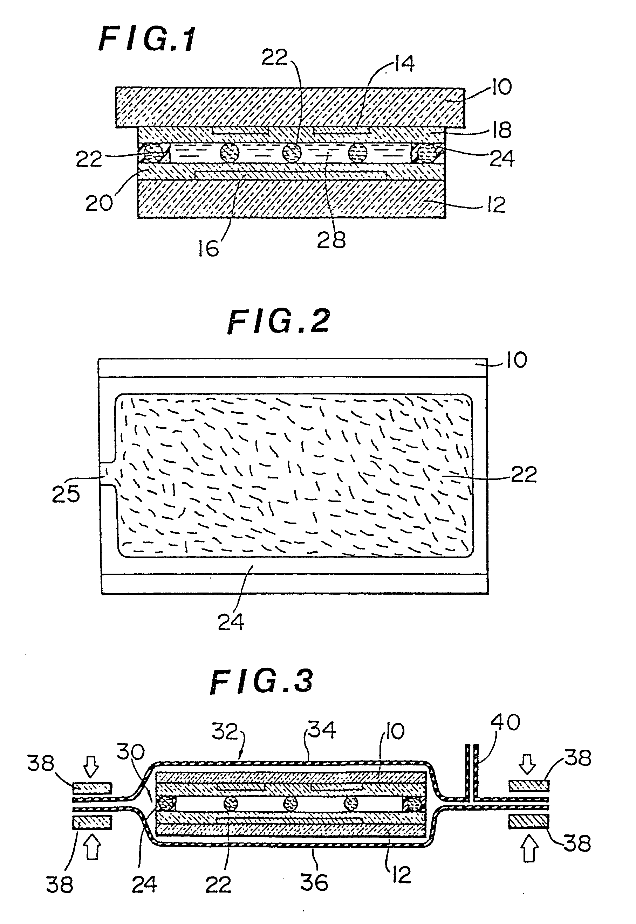

Fig. 1 and 2 show a liquid crystal display device as an example of a variety of electronic display devices producible by using a method according to the invention. Indicated at 10 and 12 are upper and lower transparent glass substrates, which are relatively large-sized such as about 100 m×200 mm when the device is for use as an automotive dashboard display by way of example. Alternative to glass plate, use may be made of a transparent plate or sheet of a heat-resistant synthetic resin as the material of the substrates 10 and 12. In that case it becomes possible to obtain a flexible display device.

The inner surface of the upper glass substrate 10 is partly coated with a transparent electrode film 14, which is formed in the pattern of segmented digits for example, and further with a liquid crystal orientation controlling film 18 which is a transparent and insulating film. The inner surface of the lower glass substrate 12 is coated with a transparent electrode film 16 and further with a liquid crystal orientation controlling film 20 which is transparent and insulating. The thus processed glass substrates 10 and 12 are brought to an opposite arrangement and bonded to each other in their peripheral regions by using a heat-curable adhesive 24 so as to leave a determined gap between the coating surfaces of the two substrates 10 and 12 over the entire area surrounded by the adhesive 24. For this purpose, a finely divided spacer material 22 is interposed between the opposite coating surfaces of the two glass substrates 10 and 12 prior to bonding, and the same spacer material 22 is added to the adhesive 24. The adhesive 24 is applied so as to leave an opening 25 at one edge of the blank cell obtained by the bonding procedure, and a liquid crystal 28 is filled into the gap or space in the blank cell through this opening 25. After that the opening 25 is completely sealed by an adhesive to complete the assembling of the liquid crystal display device.

The spacer material 22 is required to be compatible with the liquid crystal 28, non-interfering with the orientating of the liquid crystal 28, and unobstructive to the readability of the display device and invisible by the naked eye from the front side of the display device. Considering these requirements, a suitable example is a glass fiber divided into very short pieces of single filament having a uniform diameter which may be about 10 microns for instance. Another example is a fine powder of alumina very narrow in the distribution of particle size.

During the adhesive-curing step in the conventional production methods, the upper and lower glass substrates 10 and 12 of the provisionally bonded assembly are held pressed against each other by using a suitable press machine and metal dies or holders and, in that state, maintained at an elevated temperature suitable for curing of the adhesive 24, as described hereinbefore.

In a method according to the invention, the above described process of assembling the blank cell for the display device of Figs. 1 and 2, for example, is performed identically until the stage of provisionally bonding the two glass substrates 10 and 12 to each other with the interposal of the spacer material 22 therebetween by using the adhesive 24 which is not yet cured. Before commencement of the adhesive-curing step, the provisional assembly or blank cell including the uncured adhesive 24 is placed into a container which is either entirely or partly made of a flexible and elastic material such that at least one of the two glass substrates 10 and 12 of the blank cell enclosed in the container faces to a wall of the flexible material.

In Fig. 3, for example, a provisionally bonded blank cell 30 which corresponds to the display device of Figs. 1 and 2 except the absence of the liquid crystal 28 is enclosed in a container 32, which is constructed by covering the top and bottom glass surfaces of the blank cell 30 respectively with two sheets 34 and 36 of a flexible and elastic material such as a synthetic rubber, and airtightly clamping the marginal regions of the two rubber sheets 34 and 36 by a set of metal frames 38. The rubber sheet 34 has an opening where the container 32 is provided with a suction pipe 40 which is connected to a vacuum pump (not shown) or an alternative suction means. By using the suction pipe 40, the pressure in the container 32 is reduced to such an extent that the two rubber sheets 34 and 36 are pressed against the upper and lower glass substrates 10 and 12 of the blank cell 30, respectively, due to the difference between the atmospheric pressure and the reduced pressure in the container 32. Maintaining the container 32 in such an evacuated state, the enclosed blank cell 30 is heated together with the container 32 to a temperature suitable for curing of the adhesive 24 in the blank cell 30 and maintained at that temperature until completion of the curing. Then the pressure in the container 32 is reverted to the atmospheric pressure, and the firmly bonded blank cell 30 is taken out of the container 32. As an alternative method, the container 32 of Fig. 3 is constructed without the provision of the opening and the suction pipe 40 so as to airtightly enclose the blank cell 30 therein, and the container is entirely pressurized in a suitable pressure vessel such that the two rubber sheets 34 and 36 are pressed against the upper and lower glass substrates 10 and 12, respectively. The heating of the blank cell 30 for curing of the adhesive 24 is performed while the container and the enclosed blank cell 30 are kept in such a pressurized state.

Since the container 32 in Fig. 3 or any alternative thereto must be heated together with the blank cell 30 enclosed therein, the flexible and elastic material for the container is required not to deteriorate or significantly deform at the temperature employed for curing of the adhesive 24 and to be able to maintain a pressure difference of at least 13.3 mbar (10 Torr) between the exterior and interior of the container.

In the method according to the invention, an adequate pressure is applied to each of, or a selected one of, the substrates 10, 12 of the blank cell 30 via a wall (such as 34 or 36 in Fig. 3) of the elastic material employed as the container material, and this is highly effective for very uniform distribution of the pressure over the entire area of each substrate. To fully gain this effect, it is suitable to select a flexible and elastic material of which thickness $T_e$ and modulus of elasticity $E_e$ satisfy the following inequality (1) with respect to the thickness $T_s$ and modulus of elasticity $E_s$ of the substrate material.

$$\frac{E_s \times T_s}{E_e \times T_e} \quad 2 \qquad (1)$$

To accomplish the pressure-bonding method according to the invention with best quality of the product, it is preferred that $E_e$ and $T_e$ of the employed elastic material satisfy the following inequality (2).

$$\frac{E_s \times T_s}{E_e \times T_e} > 10 \qquad (2)$$

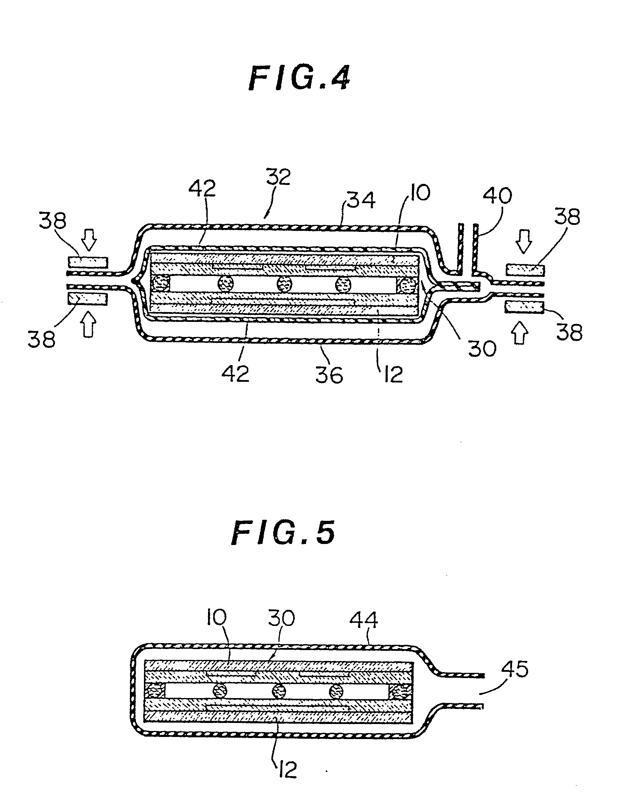

In the practice of a method according to the invention, synthetic rubber sheet such as silicone rubber sheet thinner than about 100 mm, synthetic resin film such as polyester film thinner than about 1 mm and metal foil thinner than about 30 μm can be named as suitable examples of elastic materials for use in the container for the pressure-bonding procedure. Of course it is possible to use a bag of such a sheet or film material, as illustrated in Fig. 5, instead of the use of two separate pieces 34, 36 of the sheet material illustrated in Fig. 3.

In this method, it suffices to produce a pressure difference of a relatively small magnitude between the exterior and interior of the container such as the one 32 shown in Fig. 3 because the adhesive 24 in a softened state before curing does not offer great resistance to the compression of the blank cell 30 to diminish the gap between the upper and lower substrates 10 and 12 to the limit determined by the thickness or diameter of the finely divided spacer material 22. In the case of reducing the pressure in the container, about 9.09 mbar (0.01 kg/cm²) is the minimum value of the pressure difference required for sufficient compression of the enclosed blank cell. In the case of pressurizing the container from the outside, it is suitable to pressurize such that the resultant pressure difference becomes at least about 9.09 mbar (0.01 kg/cm²) but does not exceed about 2.73 bar (3.0 kg/cm²), because the glass substrates might be damaged if a higher pressure is applied thereto.

Referring to Fig. 4, it is preferred to interpose a spacer 42 in the form of a relatively thin sheet having a porous and gas-permeable structure between each substrate 10, 12 of the blank cell 30 in the container 32 and the flexible and elastic wall 34, 36 of the container 32 particularly when the pressure in the container 32 is reduced by suction. The presence of the gas-permeable spacer 42 is effective for further enhancement of the uniformity of the clearance between the two substrates 10 and 12 in the blank cell 30 after curing of the adhesive 24. This is because each permeable spacer 42 in the container 32 provides exhaust passages extending to almost every section of the interior of the container 32 even if the flexible and elastic walls 34, 36 of the container 32 are locally pressed against the blank cell 30 in a region near the suction pipe 40 at an early stage of the evacuating process. For example, a filter paper made of a synthetic resin or a net of a synthetic fiber yarn is of use as the material of the permeable spacer 42. An alternative method of obtaining a similar effect is to use a flexible and elastic sheet or film material having an undulated or grooved surface as the material of the container 32 such that the undulated or grooved surface of the sheet material faces to the blank cell 30 placed in the container 32.

In practice it is convenient to integrate the rubber sheets 34, 36 or any alternative thereto and the metal frames 38 in Fig. 3, and also the permeable spacers 42 in Fig. 4 if desired, into a unitary assembly.

The present invention will be further illustrated by the following examples.

Example 1

In this example the blank cell 30 in Fig. 3 for the liquid crystal display device of Figs. 1 and 2 was produced by using a pressure-bonding method illustrated in Fig. 3.

A glass sheet having a thickness of 1 mm was employed as the material of the upper and lower substrates 10 and 12 which were each 100 mm×200 mm wide. The upper substrate 10 was coated with the transparent electrode film 14 and the liquid crystal orientation controlling film 18 by conventional methods, and the lower substrate 12 was coated with the transparent electrode film 16 and the orientation controlling film 20 by similar methods. The thus processed upper substrate 10 was placed upside down, and a finely divided glass fiber 22 consisting of about 50 μm long pieces of glass filament having a diameter of 10 μm was scattered on the surface of the orientation controlling film 18 by using a standard sieve having 37 μm openings such that the density of the scattered glass fiber 22 became 1.5 pieces/mm² over the entire area of the orientation controlling film 18. An epoxy base adhesive 24 was applied onto the orientation controlling film 20 on the lower substrate 12 by a printing method so as to form an about 2 mm wide belt-like adhesive layer along the entire periphery of the substrate 12 except for an about 2 mm long interruption corresponding to the opening 25 in Fig. 2 for introduction of a liquid crystal into the completed blank cell 30. Then the lower substrate 12 was placed on the upper substrate 10 kept upside down so as to sandwich the glass fiber spacer 22 between the orientation controlling films 18 and 20 of the respective substrates 10 and 12 and gently pressed to obtain a provisionally integrated blank cell 30 as shown in Fig. 3.

The provisionally integrated blank cell 30 was loosely sandwiched between two silicone rubber sheets 34 and 36, which were each about 1 mm in thickness, and the marginal regions of the rubber sheets 34, 36 were airtightly clamped by a set of frames 38 made of aluminum plate to thereby form a container 32. The upper sheet 34 had an opening where the container 32 was provided with a suction pipe 40.

Using a rotary vacuum pump to which the suction pipe 40 was connected, the interior of the container 32 was evacuated to a pressure of 0.2 mbar ($1.5 \times 10^{-1}$ mmHg) with the result that the blank cell 30 was compressed by the atmospheric pressure applied thereto via the silicone rubber sheets 34, 36 to uniformly diminish the clearance between the coating surfaces of the two substrates 10 and 12 to approximately 10 μm, i.e. the diameter of the glass fiber filament 22 used as the spacer material. In the evacuated state, the container 32 and the enclosed blank cell 30 were heated to 100°C and maintained at this temperature for 2 hr to completely cure the adhesive 24 to thereby accomplish firm bonding of the upper and lower glass substrates 10 and 12 to each other. After lowering of the temperature the pressure in the container 32 was reverted to the atmospheric pressure, and the firmly integrated blank cell 30 was taken out of the container. When the blank cell 30 was relieved from the pressed state, there occurred a microscopically small increase in the distance between the two substrates 10 and 12 in a central region of the blank cell, but, nevertheless, the uniformity of the distance between the two substrates 10 and 12 in the obtained blank cell 30 was quite satisfactory.

For quantitative examination of the uniformity of the distance between the two substrates 10 and 12 in the blank cell 30 produced in this example, the distance was accurately measured at 100 different points distributed over the entire display area of the blank cell, and the measurements were treated to statistically determine the width of dispersion. As the result, the mean value of the distance was 12.1 μm, a value close to the diameter (10 μm) of the glass fiber filament 22 used as the spacer, and the standard deviation was 1.25 μm. For comparison, when the same blank cell 30 was integrated by a conventional pressure-bonding method using a press machine and metal dies, the mean value of the distance between the two substrates 10 and 12 was about 13.5 μm, and it was difficult to prevent the standard deviation from exceeding 2.00 μm.

As will be understood, the finely divided spacer 22 should be scattered uniformly so as to be distributed at a suitable density. If scattered at a very low density the effect of the spacer remains insufficient, but if scattered at an unduly high density the individual pieces of spacer material are liable to overlap with one another, and, therefore, in either case it becomes difficult to realize a satisfactorily uniform distance between the two substrates 10 and 12. In the case of the finely divided glass fiber 22 used in this example, the scattering density of 1.5 pieces/mm$^2$ was confirmed to be optimum.

Example 2

The blank cell 30 described in Example 1 was produced by the process described in Example 1. As a sole modification, the adhesive 24 used in the peripheral region of the cell was additionally interposed between the two substrates 10 and 12 at a number of tiny spots in a central region of the cell.

The distance between the two substrates 10 and 12 in the blank cell 30 produced in this example was examined in the same manner as in Example 1. As the result the mean value was 11.2 μm, and the standard deviation was 0.66 μm. As a probable reason for such improved accuracy and uniformity of the distance between the two substrates 10 and 12, the adhesive existed at many spots in the central region of the blank cell served the purpose of forcibly keeping the two substrates 10 and 12 at a distance approximately equal to the diameter of the glass fiber filament 22 even when the blank cell was relieved from the pressed state.

Example 2A

The blank cell 30 described in Example 1 was produced by the process employed in Example 2, except that the pressure in the container 32 was maintained at about 750 mmHg by using an air pump instead of the rotary vacuum pump used in Examples 1 and 2.

The distance between the two substrates 10 and 12 in the blank cell 30 produced in this example was examined in the same manner as in Example 1. As the result the mean value was 11.1 μm, and the standard deviation was 0.96 μm.

Example 3

This example was almost identical with Example 2, but in this example the silicone rubber sheets 34, 36 used for the container 32 had a thickness of 4 mm.

The mean value of the distance between the two substrates 10 and 12 in the blank cell 30 produced in this example was 11.2 μm, and the standard deviation was 0.96 μm.

Example 4

As a sole modification of the process of Example 2, each of the silicone rubber sheets 34, 36 in Example 2 was replaced by a polyester film having a thickness of 25 μm.

The mean value of the distance between the two substrates 10 and 12 in the blank cell 30 produced in this example 2 was 11.3 μm, and the standard deviation was 1.15 μm.

Example 5

The provisional integration of the blank cell 30 was performed in accordance with Example 2. The container 32 described in Example 1 was modified by using a glass plate having a thickness of 3 mm in place of the lower one 36 of the two silicone rubber sheets 34, 36. By using the modified container, the pressure-bonding process of Example 1 was carried out identically.

The mean value of the distance between the two substrate 10 and 12 in the blank cell 30 produced in this example was 12.0 µm, and the standard deviation was 1.45 µm.

Example 6

In this example, a glass plate having a thickness of 3 mm was used as the material of the two substrates 10 and 12 of the blank cell 30 described in Example 1. The provisional integration of the blank cell 30 was performed in accordance with Example 2, and the subsequent pressure-bonding process was performed in accordance with Example 1.

The mean value of the distance between the two substrates 10 and 12 in the blank cell 30 produced in this example was 11.4 µm, and the standard deviation was 1.10 µm.

Example 7

The provisional integration of the blank cell 30 described in Example 1 was performed in accordance with Example 2, supplemented by heating of the provisionally integrated blank cell 30 at 60°C for 30 min in the atmosphere.

Referring to Fig. 5, use was made of a bag 44 made of a silicon rubber sheet having a thickness of 0.3 mm instead of the container 32 shown in Fig. 3. The provisionally integrated blank cell 30 was placed in this bag 44, and the interior of the bag 44 was evacuated by connecting the opening 45 of the bag 44 to a rotary vacuum pump (not shown). In the evacuated state, the bag 44 and the blank cell 30 contained therein were heated to 100°C and maintained at this temperature for 2 hr to thereby completely cure the adhesive in the blank cell 30. After lowering of the temperature the interior of the bag 44 was reverted to the atmospheric pressure, and the blank cell 30 was taken out of the bag 44.

The mean value of the distance between the two substrates 10 and 12 in the thus produced blank cell 30 was 12.0 µm, and the standard deviation was 1.22 µm.

Example 8

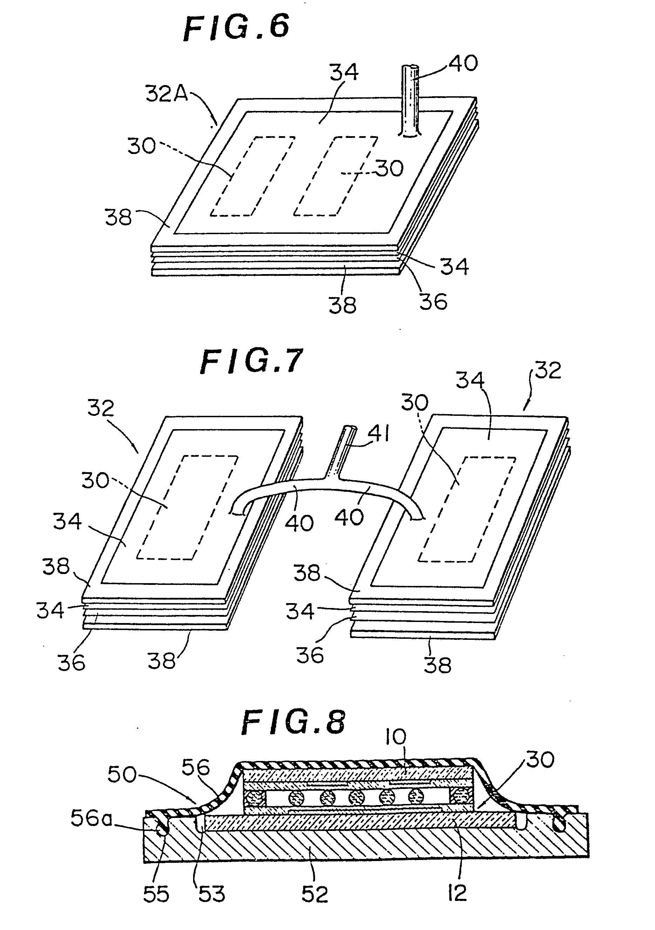

The provisional integration operation described in Example 2 was performed to prepare two identical sets of provisionally integrated blank cells 30. Referring to Fig. 6, the two blank cells 30 were placed in a single container 32A which was identical in construction to the container 32 shown in Fig. 3 and described in Example 1 but was larger in size. Then the pressure-bonding process described in Example 1 was carried out identically.

The distance between the two substrates 10 and 12 in each of the two blank cells 30 produced in this way was examined in the same manner as in Example 1. As the result the mean value was 11.5 µm in one blank cell 30 and 11.3 µm in the other, and the standard deviation was 1.12 µm in the former blank cell and 1.21 µm in the latter.

Example 9

Two identical sets of provisionally integrated blank cells 30 were prepared by the method described in Example 2. Referring to Fig. 7, one of the two blank cells 30 was placed in the container 32 shown in Fig. 3 and described in Example 1, and the other blank cell was placed in a separate but identical container 32. The suction pipes 40 provided to the respective containers 32 were joined to a common pipe 41, which was connected to a rotary vacuum pump (not shown). Then the pressure-bonding process described in Example 1 was carried out identically to accomplish integration of the respective blank cells 30 simultaneously.

The distance between the substrates 10 and 12 in each of the two blank cells 30 produced in this way was examined in the same way as in Example 1. As the result the mean value was 11.4 µm in one blank cell 30 and 11.3 µm in the other, and the standard deviation was 1.11 µm in the former blank cell and 1.12 µm in the latter.

Example 10

This example was almost identical with Example 1 except the particulars of the glass fiber spacer 22. In this example, a finely divided glass fiber filament having a diameter of 8 µm was scattered on the coating surface of the upper substrate 10 which had been placed upside down, and the glass fiber used in Example 1 (filament diameter was 10 µm) was added to the adhesive 24 used in the peripheral region of the blank cell.

The mean value of the distance between the two substrates 10 and 12 in the blank cell 30 produced in this example was 11.1 µm, and the standard deviation was 1.10 µm.

Example 11

The provisional integration of the blank cell 30 was performed in exact accordance with Example 1.

Referring to Fig. 4, the provisionally integrated blank cell 30 was sandwiched between two sheets 42 of 0.1 mm thick filter paper made of polytetrafluoroethylene and, in this state, placed in the container 32 described in Example 1. It will be understood that the filter paper sheets 42 were used as a gas-permeable spacer. Then the pressure-bonding process described in Example 1 was carried out with no modifications.

The mean value of the distance between the two substrates 10 and 12 in the blank cell 30 obtained in this example was 11.9 µm, and the standard deviation was 1.22 µm. Compared with the data obtained in Example 1, the mean value and standard deviation of the distance obtained in this example demonstrate the effectiveness of the gas-permeable spacer 42 for enhancement of the accuracy and uniformity of the distance between the two substrates 10 and 12.

Example 12

This example was almost identical with Example 2. As a sole difference, the filter paper spacer 42 described in Example 11 was used in the same manner.

The mean value of the distance between the two substrates 10 and 12 in the blank cell obtained in this example was 11.0 µm, and the standard deviation was 0.65 µm.

Example 12A

This example was almost identical with Example 2A. A sole point of difference was the use of the filter paper spacer 42 described in Example 11.

The mean value of the distance between the two substrates 10 and 12 obtained in this example was 11.0 µm, and the standard deviation was 0.85 µm.

Example 13

This example was almost identical with Example 3. A sole point of difference was the use of the filter paper spacer 42 described in Example 11.

The mean value of the distance between the two substrated 10 and 12 in the blank cell 30 obtained in this example was 11.4 µm, and the standard deviation was 0.86 µm.

Example 14

This example was almost identical with Example 4, but the filter paper spacer 42 described in Example 11 was used in the same manner.

The mean value of the distance between the two substrates 10 and 12 in the blank cell 30 obtained in this example was 11.2 µm, and the standard deviation was 1.10 µm.

Example 15

This example was almost identical with Example 5, but the filter paper spacer 42 described in Example 11 was used in the same manner.

The mean value of the distance between the two substrates 10 and 12 in the blank cell 30 obtained in this example was 11.5 µm, and the standard deviation was 1.35 µm.

Example 16

This example was almost identical with Example 6, but the filter paper spacer 42 described in Example 11 was used in the same manner.

The mean value of the distance between the two substrates 10 and 12 in the blank cell 30 obtained in this example was 11.3 µm, and the standard deviation was 1.05 µm.

Example 17

This example was almost identical with Example 7, but the filter paper spacer 42 described in Example 11 was used in the same manner.

The mean value of the distance between the two substrates 10 and 12 in the blank cell 30 obtained in this example was 12.0 µm, and the standard deviation was 1.22 µm.

Example 18

This example was almost identical with Example 8, but the filter paper spacer 42 described in Example 11 was used in the same manner for each of the two sets of the provisionally integrated blank cells 30.

The mean value of the distance between the two substrates 10 and 12 was 11.4 µm in one of the two blank cells 30 produced in this example and 11.2 µm in the other, and the standard deviation was 1.10 µm in the former cell and 1.18 µm in the latter.

Example 19

This example was almost identical with Example 9, but the filter paper spacer described in Example 11 was used in the same manner for each of the two sets of the provisionally integrated blank cells 30.

The mean value of the distance between the two substrates 10 and 12 was 11.0 µm in one of the two blank cells 30 produced in this example and 11.2 µm in the other, and the standard deviation was 1.10 µm in the former cell and 1.14 µm in the latter.

Example 20

This example was almost identical with Example 10, but the filter paper spacer 42 described in Example 11 was used in the same manner.

The mean value of the distance between the two substrates 10 and 12 in the blank cell 30 produced in this example was 11.0 µm, and the standard deviation was 1.00 µm.

Example 21

This example was almost identical with Example 12. As a sole modification, use was made of a 0.6 mm thick paper towel as a gas-permeable spacer 42 in place of the 0.1 mm thick filter paper in Example 12.

The mean value of the distance between the two substrates 10 and 12 in the blank cell 30 produced in this example was 11.9 µm, and the standard deviation was 1.10 µm.

Example 22

This example was almost identical with Example 12. As a sole modification, use was made of a net which was made of a nylon yarn and in the form of a bag as a gas-permeable spacer 42 in place of the filter paper in Example 12. The nylon yarn was 0.7 mm in diameter, and the openings of the net were hexagonal with a distance of 5 mm between two opposite sides.

The mean value of the distance between the two substrates 10 and 12 in the blank cell 30 produced in this example was 11.6 µm, and the standard deviation was 1.64 µm.

Example 23

The provisional integration of the blank cell 30 was carried out in exact accordance with Example 1.

The provisionally integrated blank cell 30 was placed in a container which was almost similar to the container 32 shown in Fig. 3 and described in Example 1 except the omission of the opening and the pipe 40 for evacuation. This container was airtightly sealed and placed in a pressure vessel in which the pressure of air was maintained at 0.45 bar (0.5 kg/cm²) (gauge pressure), so that the two substrates 10 and 12 of the provisionally integrated blank cell 30 in the container were pressed toward each other via the silicone rubber walls 34, 36 of the container. In this state, the container and the blank cell 30 contained therein were heated at 100°C for 2 hr to completely cure the adhesive in the blank cell 30. After lowering of the temperature, the interior of the pressure vessel was reverted to the atmospheric pressure, and the blank cell 30 was taken out of the container.

The distance between the two substrates 10 and 12 in the thus produced blank cell 30 was examined in the same manner as in Example 1. As the result the mean value of the distance was 12.2 μm, and the standard deviation was 1.20 μm.

Example 24

The provisional integration of the blank cell 30 was carried out in exact accordance with Example 1.

Referring to Fig. 8, the lower glass substrate 12 of the provisionally integrated blank cell 30 was placed on a 20 mm thick stainless steel plate 52, which was formed with a rectangular recess 53 having a depth of 1 mm to receive therein the substrate 12 and a groove 55 surrounding the recess 53 at some distance therebetween. Then a silicone rubber sheet 56 having a thickness of 2 mm was placed on the upper glass substrate 10 of the blank cell 30, and a peripheral projection 56a formed on the rear side of the rubber sheet 56 was tightly fitted into the groove 55 of the stainless steel plate 52. Thus, the stainless steel plate 52 and the silicone rubber sheet 56 constituted an airtightly sealed container 50.

The container 50 of Fig. 8 with the provisionally integrated blank cell 30 tightly enclosed therein was placed in the pressure vessel mentioned in Example 23, and the pressurizing and heating operations described in Example 23 were carried out identically.

The mean value of the distance between the two substrates 10 and 12 in the blank cell 30 produced in this example was 12.5 μm, and the standard deviation was 1.50 μm.

A commercially available liquid crystal was filled in each of the blank cells produced in the above described examples to obtain a liquid crystal display device. It was confirmed that every display device was satisfactory in the uniformity of the response time over the entire display area. A separate group of display devices were produced by using a liquid crystal of the guest-host type containing a pigment, and it was confirmed that every display device exhibited practically no unevenness of the colored display.

Those display devices which were produced by using the blank cells integrated with the existence of a gas-permeable spacer between each substrate of the cell and a flexible wall of the container (32 or 44) were particularly superior in the uniformity of the response time and the density of the color the liquid crystal assumed.

Besides liquid crystal display devices, electronic display devices of different types such as electrochromic display devices and photochromic display devices also can be produced by utilizing the method according to the invention. In the case of an electrochromic display device for example, a layer of a color-producing electrochromic material such as tungsten oxide is formed in the blank cell, and an electrolytic liquid such as a solution of lithium perchlorate in propylene carbonate is filled into the blank cell. Furthermore, a porous sheet as thin as about 0.2—0.3 micron and having micropores of a few microns needs to be interposed between the two substrates of an electrochromic display device. Therefore, in producing a blank cell for an electrochromic display device by using the pressure-bonding method according to the invention, a spacer is interposed between the mentioned porous sheet and each substrate of the cell.

**Claims**

1. A method for producing an electronic display device containing a liquid display medium (28) filled in a gap between two plate-shaped substrates (10, 12) which are arranged opposite and parallel to each other and both formed with electrode coating layers (14, 16) on the opposite surfaces thereof, the method having the steps of placing one of the two electrode coated substrates on the other with interposal of a finely divided spacer material (22) therebetween and with application of a heat-curable adhesive (24) to a peripheral region of at least one of the substrates so as to provisionally bond the two substrates to each other to thereby obtain a provisionally integrated blank cell (30), applying a pressure to the provisionally integrated blank cell to diminish the distance between the two substrates to a definite value determined by the spacer material, heating the provisionally integrated blank cell in the pressed state so as to cure the adhesive to thereby firmly bond the two substrates to each other, and filling a liquid display medium into the gap between the two substrates, characterized in that the pressure applying step comprises the substeps of placing the provisionally integrated blank cell in a container (32; 44; 50) which is at least partly made of a flexible and elastic material such that at least one of the two substrates (10, 12) faces to a wall (34; 36; 44; 56) of the flexible and elastic material, and producing a pressure difference across the walls of the container such that the pressure in the container becomes relatively low to such an extent that one of the two substrates is pressed toward the other via said wall of the flexible and elastic material.

2. A method according to claim 1, wherein said pressure difference is produced by reducing the pressure in said container to a subatmospheric pressure.

3. A method according to claim 2, wherein the pressure applying step further comprises the substep of interposing a gas-permeable spacer (42) between said wall of said flexible and elastic material and the substrate facing to said wall.

4. A method according to claim 3, wherein said gas-permeable spacer is a paper sheet.

5. A method according to claim 3, wherein said gas-permeable spacer is a cloth sheet.

6. A method according to claim 3, wherein said gas-permeable spacer is a net.

7. A method according to claim 1, wherein said pressure difference is produced by applying a fluid pressure to said container from the outside.

8. A method according to claim 1, wherein said flexible and elastic material is selected such that the ratio of (the modulus of elasticity of the material of said substrate) × (thickness of each substrate) to (the modulus of elasticity of said flexible and elastic material) × (thickness of said wall) becomes greater than 2.

9. A method according to claim 8, wherein said flexible and elastic material is selected such that the ratio becomes greater than 10.

10. A method according to claim 8, wherein said substrates are made of glass.

11. A method according to claim 8, wherein said substrates are made of synthetic resin.

12. A method according to claim 1, wherein said flexible and elastic material is a rubber sheet.

13. A method according to claim 1, wherein said flexible and elastic material is a synthetic resin film.

14. A method according to claim 1, wherein said flexible and elastic material is a metal foil.

15. A method according to claim 1, wherein said container (32) is constituted of two sheets (34, 36) of said flexible and elastic material airtightly held together along the periphery thereof.

16. A method according to claim 1, wherein said container (44) is a bag formed of a sheet of said flexible and elastic material.

17. A method according to claim 1, wherein said container (50) is constituted of a plate (52) of a rigid material and a sheet (56) of said flexible and elastic material airtightly joined to said plate in a peripheral region thereof.

18. A method according to claim 1, wherein said finely divided spacer material (22) is a finely divided glass fiber.

19. A method according to claim 1, wherein said finely divided spacer material is an alumina powder.

20. A method according to claim 1, wherein said liquid display medium is a liquid crystal.

**Revendications**

1. Un procédé de fabrication d'un dispositif électronique d'affichage contenant un matériau liquide d'affichage (28) introduit dans un espace entre deux substrats (10, 12) en forme de plaque qui sont agencées face à face et parallèles l'un à l'autre et tous deux formés avec des couches de revêtement d'électrode (14, 16) sur leurs surfaces en vis-à-vis, le procédé comprenant les étapes de placer l'un des deux substrats enduits d'électrode sur l'autre avec interposition d'un matériau finement subdivisé d'espacement (22) entre eux et avec application d'un adhésif thermodurcissable (24) à une région périphérique d'au moins l'un des substrats afin de relier provisoirement les deux substrats l'un à l'autre pour ainsi obtenir une ébauche de cellule (30) provisoirement intégrée, d'appliquer une pression à l'ébauche de cellule provisoirement intégrée pour diminuer la distance entre les deux substrats à une valeur définie déterminée par le matériau d'espacement, de chauffer l'ébauche de cellule provisoirement intégrée à l'état pressé afin de durcir l'adhésif pour ainsi coller fermement les deux substrats l'un à l'autre et d'introduire un matériau liquide d'affichage dans l'espace entre les deux substrats, caractérisé en ce que l'étape d'application de pression comprend les sous-étapes de placer l'ébauche de cellule provisoirement intégrée dans un réservoir (32; 44; 50) qui est au moins partiellement fait en une matière flexible et élastique de façon qu'au moins l'un des deux substrats (10, 12) soit face à une paroi (34; 36; 44; 56) de la matière flexible et élastique, et de produire une différence de pression entre les parois du récipient de façon que la pression dans le récipient devienne relativement faible au point que l'un des deux substrats soit pressé vers l'autre par l'intermédiaire de ladite paroi de matière flexible et élastique.

2. Un procédé selon la revendication 1, où ladite différence de pression est produite en réduisant la pression dans ledit récipient à une pression subatmosphérique.

3. Un procédé selon la revendication 2, où l'étape d'application de pression comprend de plus la sous-étape d'interposer une pièce perméable aux gaz d'espacement (42) entre ladite paroi de ladite matière flexible et élastique et le substrat faisant face à ladite paroi.

4. Un procédé selon la revendication 3, où ladite pièce d'espacement perméable aux gaz est une feuille de papier.

5. Un procédé selon la revendication 3, où ladite pièce d'espacement perméable aux gaz est une feuille de tissu.

6. Un procédé selon la revendication 3, où ladite pièce d'espacement perméable aux gaz est un filet.

7. Un procédé selon la revendication 1, où ladite différence de pression est produite en appliquant une pression de fluide audit récipient à partir de l'extérieur.

8. Un procédé selon la revendication 1, où ladite matière flexible et élastique est choisie de façon que le rapport du (module d'élasticité du matériau dudit substrat) × (épaisseur de chaque substrat) au (module d'élasticité de ladite matière flexible et élastique) × (épaisseur de ladite paroi) soit supérieur à 2.

9. Un procédé selon la revendication 8, où ladite matière flexible et élastique est choisie de façon que le rapport soit supérieur à 10.

10. Un procédé selon la revendication 8, où lesdits substrats sont faits en verre.

11. Un procédé selon la revendication 8, où lesdits substrats sont faits en une résine synthétique.

12. Un procédé selon la revendication 1, où ladite matière flexible et élastique est une feuille de caoutchouc.

13. Un procédé selon la revendication 1, où ladite matière flexible et élastique est un film de résine synthétique.

14. Un procédé selon la revendication 1, où ladite matière flexible et élastique est une feuille de métal.

15. Un procédé selon la revendication 1, où ledit récipient (32) est constitué de deux feuilles (34, 36) de ladite matière flexible et élastique qui sont maintenues de manière étanche à l'air sur leur pourtour.

16. Un procédé selon la revendication 1, où ledit récipient (44) est un sac formé d'une feuille de ladite matière flexible et élastique.

17. Un procédé selon la revendication 1, où ledit récipient (50) est constitué d'une plaque (52) d'un matériau rigide et d'une feuille (56) de ladite matière flexible et élastique jointe de manière étanche à l'air à ladite plaque dans sa région périphérique.

18. Un procédé selon la revendication 1, où ledit matériau finement subdivisé d'espacement (22) est une fibre de verre finement subdivisée.

19. Un procédé selon la revendication 1, où ledit matériau finement subdivisé d'espacement est une poudre d'alumine.

20. Un procédé selon la revendication 1, où ledit matériau liquide d'affichage est un cristal liquide.

**Patentansprüche**

1. Verfahren zur Herstellung einer elektronischen Anzeigeeinrichtung mit einem flüssigen Anzeigemedium (28), welches in einen Spalt zwischen zwei plattenförmigen Substraten (10, 12) eingefüllt ist, die einander gegenüberliegend und parallel zueinander angeordnet sind und auf den einander gegenüberliegenden Oberflächen mit Elektrodenschichten (14, 16) versehen sind, welches Verfahren die Schritte umfaßt, eines der beiden mit Elektroden beschichteten Substrate unter Zwischenschaltung eines feinteiligen Abstandshaltermaterials (22) auf das andere aufzubringen, wobei auf einen Umfangsbereich mindestens eines der Substrate ein hitzehärtbarer Klebstoff (24) aufgebracht ist, um die beiden Substrate provisorisch miteinander zu verbinden, um in dieser Weise eine provisorisch vereinigte leere Zelle (30) zu bilden, Druck auf die provisorisch vereinigte leere Zelle auszuüben, um den Abstand zwischen den beiden Substraten auf einen durch das Abstandshalter-material definierten Wert zu bringen, die provisorisch vereinigte leere Zelle in dem zusammengepreßten Zustand zu erhitzen, um den Klebstoff auszuhärten und in dieser Weise die beiden Substrate fest miteinander zu verbinden, und ein flüssiges Anzeigemedium in den Spalt zwischen den beiden Substraten einzufüllen, dadurch gekennzeichnet, daß die Maßnahme der Ausübung von Druck die Unterschritte umfaßt, die provisorisch vereinigte leere Zelle in einen Behälter (32; 44; 50), der zumindest teilweise aus einem flexiblen und elastischen Material besteht, derart einzubringen, daß mindestens eines der beiden Substrate (10, 12) einer Wand (34; 36; 44; 56) aus dem flexiblen und elastischen Material gegenüberliegt, und eine Druckdifferenz über die Wandungen der Behälters derart auszuüben, daß der Druck in dem Behälter in dem Umfang relativ neidrig wird, daß eines der beiden Substrate über die Seitenwandung aus dem flexiblen und elastischen Material gegen das andere gepreßt wird.

2. Verfahren nach Anspruch 1, dadurch gekennzeichnet, daß die Druckdifferenz dadurch erzeugt wird, daß der Druck in dem Behälter auf unteratmosphärischen Druck abgesenkt wird.

3. Verfahren nach Anspruch 2, dadurch gekennzeichnet, daß der Schritt der Anwendung von Druck den weiteren Unterschritt umfaßt, einen gasdurchlässigen Abstandhalter (42) zwischen die Wand aus dem flexiblen und elastischen Material und dem dieser Wand gegenüberliegenden Substrat einzubringen.

4. Verfahren nach Anspruch 3, dadurch gekennzeichnet, daß man als gasdurchlässigen Abstandshalter ein Papierblatt verwendet.

5. Verfahren nach Anspruch 3, dadurch gekennzeichnet, daß man als gasdurchlässigen Abstandshalter eine Stoffbahn verwendet.

6. Verfahren nach Anspruch 3, dadurch gekennzeichnet, daß man als gasdurchläsiigen Abstandshalter ein Netz einsetzt.

7. Verfahren nach Anspruch 1, dadurch gekennzeichnet, daß die Druckdifferenz dadurch erzeugt wird, daß man einen Flüssigkeitsdruck von außen auf den Behälter einwirken läßt.

8. Verfahren nach Anspruch 1, dadurch gekennzeichnet, daß das flexible und elastische Material derart ausgewählt wird, daß das Verhältnis von (Elastizitätsmodul des Materials des Substrats) × (Dicke des jeweiligen Substrats) zu (Elastizitätsmodul des flexiblen und elastischen Materials) × (Dicke der Wandung) größer als 2 ist.

9. Verfahren nach Anspruch 8, dadurch gekennzeichnet, daß das flexible und elastische Material derart ausgewählt wird, daß das Verhältnis größer ist als 10.

10. Verfahren nach Anspruch 8, dadurch gekennzeichnet, daß die Substrate aus Glas bestehen.

11. Verfahren nach Anspruch 8, dadurch gekennzeichnet, daß die Substrate aus synthetischem Harz bestehen.

12. Verfahren nach Anspruch 1, dadurch gekennzeichnet, daß man als flexibles und elastisches Material ein Gummiblatt verwendet.

13. Verfahren nach Anspruch 1, dadurch gekennzeichnet, daß man als flexibles und elastisches Material eine Folie aus einem synthetischen Harz einsetzt.

14. Verfahren nach Anspruch 1, dadurch gekennzeichnet, daß man als flexibles und elastisches Material eine Metallfolie verwendet.

15. Verfahren nach Anspruch 1, dadurch gekennzeichnet, daß der Behälter (32) aus zwei Bahnen (34, 36) aus dem flexiblen und elastischen Material besteht, die in ihrem Umfangsbereich luftdicht miteinander verbunden sind.

16. Verfahren nach Anspruch 1, dadurch gekennzeichnet, daß der Behälter (44) ein Beutel aus einer Bahn aus dem flexiblen und elastischen Material ist.

17. Verfahren nach Anspruch 1, dadurch gekennzeichnet, daß der Behälter (15) aus einer Platte (52) aus einem starren Material und einer Bahn (56) aus dem flexiblen und elastischen Material, welches in seinem Umfangsbereich luftdicht mit der Platte verbunden ist, besteht.

18. Verfahren nach Anspruch 1, dadurch gekennzeichnet, daß als feinteiliges Abstandshaltermaterial (22) feinteilige Glasfasern eingesetzt werden.

19. Verfahren nach Anspruch 1, dadurch gekennzeichnet, daß als feinteiliges Abstandshaltermaterial Aluminiumoxidpulver verwendet wird.

20. Verfahren nach Anspruch 1, dadurch gekennzeichnet, daß man als flüssiges Anzeigemedium einen Flüssigkristall verwendet.

## FIG.1

## FIG.2

## FIG.3

# FIG.4

# FIG.5

## FIG.6

## FIG.7

## FIG.8